# EUROPEAN PATENT APPLICATION

(11) **EP 2 566 294 A1**
(43) Date of publication of application: **06.03.2013**
(21) Application number: 11179470.7
(22) Date of filing: 31.08.2011
(51) Int. Cl.: H05B 1/02, H02J 9/00

(54) **Appliance control device**

(71) Applicant: Koninklijke Philips Electronics N.V., 5621 BA Eindhoven (NL)
(72) Inventor: De Grandis, Federico, 5600 AE Eindhoven (NL)
(74) Representative: Damen, Daniel Martijn

(57) **Abstract**

An appliance such as an electrical cooker has a controller (15) configured to run a predetermined control routine that extends over a given period so as provide a sequence of control signals for controlling at least one component of the appliance such as its heater (2) and food stirring motor (10), an input (11). An energy storage device (C2) coupled to a mains input for stores energy to power the controller when a temporary mains power interruption occurs during the routine, the storage device only storing sufficient energy for the controller to continue to run the routine after a temporary mains power interruption of a given duration less than the period of the routine.

## Description

### FIELD OF THE INVENTION

This invetion invention relates to a control device for use with an appliance for example a cooker.

### BACKGROUND OF THE INVENTION

Appliances such as electrical cookers may include a control device that comprises a controller configured to run a control routine over a given period that provides a sequence of control signals for controlling components of the appliance. For example, in an electrical cooker, the control routine may control a motor which is used to stir food whilst being cooked and also to control the supply of electrical power to a heating element to heat the food being cooked. The control device is typically powered by a low voltage supply derived from a mains AC input that is used to power components of the appliance such as the electrical heater and motor.

However, electrical mains supply networks are not always reliable and sometimes electrical AC power is subject to transmission interruptions, also called blackouts. Generally, in the past, appliance control devices respond to the power interruption by ceasing to run the control routine and reset themselves ready to start the routine again when the power supply resumes after the interruption.

### SUMMARY OF THE INVENTION

In accordance with the invention it has been appreciated that in certain circumstances, power interruptions of a short duration need not require the control device to reset itself and that the control routine can continue.

According to the invention there is provided a control device for use with an appliance, comprising a controller configured to run a predetermined control routine that extends over a given period so as provide a sequence of control signals for controlling at least one component of the appliance, an input to be connected to a mains electrical supply, and an energy storage device coupled to the input for storing energy from the mains supply and configured to power the controller using the energy stored in the storage device to permit continuation of running of the predetermined routine in response to a temporary mains power interruption during the routine, the storage device only storing sufficient energy for the controller to permit continuation of running of the routine in response to a temporary mains power interruption of a given duration less than the period of the routine.

The control device according to the invention may advantageously be used in an electrical cooker, for example a slow cooker, so that the controller continues to run the predetermined control routine after temporary power supply interruptions of the order of seconds, e.g. 10 seconds. In accordance with the invention, it has been appreciated that the cooking performed according to the routine run by the controller may not be unduly prejudiced by a short interruption of the electrical power supply of the order of e.g. up to 10 seconds.

Conveniently, the storage device may be configured to store only sufficient energy for the controller to continue to run for a temporary mains power interruption that is at least ten times less than the period of the routine.

### BRIEF DESCRIPTION OF THE DRAWINGS

In order that the invention may be more fully understood an embodiment thereof will now be described by way of illustrative example with reference to the accompanying drawings in which:
Figure 1 is an elevational view in partial section of a slow cooker that incorporates a control device;
Figure 2 is a second diagram of the main components of the cooker shown in Figure 1;
Figure 3 is a graph of voltage changes that occur during a power supply interruption; and
Figure 4 is a flowchart of a process run by the control device in response to a power supply interruption.

### DETAILED DESCRIPTION

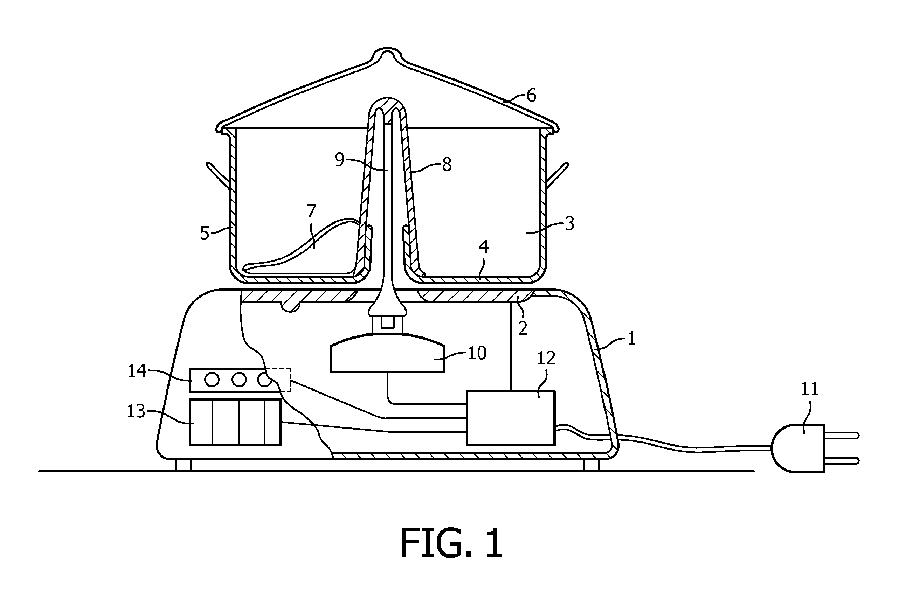

Referring to Figure 1, an electrical appliance in the form of a slow cooker comprises a housing 1 which is designed to sit on a kitchen counter and has a generally disc shaped electrical heater 2 mounted on its upper side in a horizontal configuration to receive a cooking pot 3 having a flat, disc shaped base 4, a cylindrical side wall 5 and a removable lid 6.

A stirring blade 7 is coupled to a vertically extending axial column member 8 connected by axial coupling piece 9 to an electric motor 10 mounted in the housing. An AC electrical supply is coupled through plug 11 to the motor 10 and also to the electrical heater element 2.

The slow cooker can perform different cooking routines determined by a control device 12 which controls operation of the motor 10 and the cooking temperature for the electrical heater 2. The cooking routines may typically be of a duration up to 99 minutes depending on the particular cooking routine to be implemented. The various cooking routines can be selected by means of an input device 13 mounted on the exterior of the housing 1, which may comprise a switch panel that allows cooking routine selections to be made by the user. Additionally, a display panel 14 is provided on the housing 1, which may include an LCD or other similar display to indicate progress of the cooking routine.

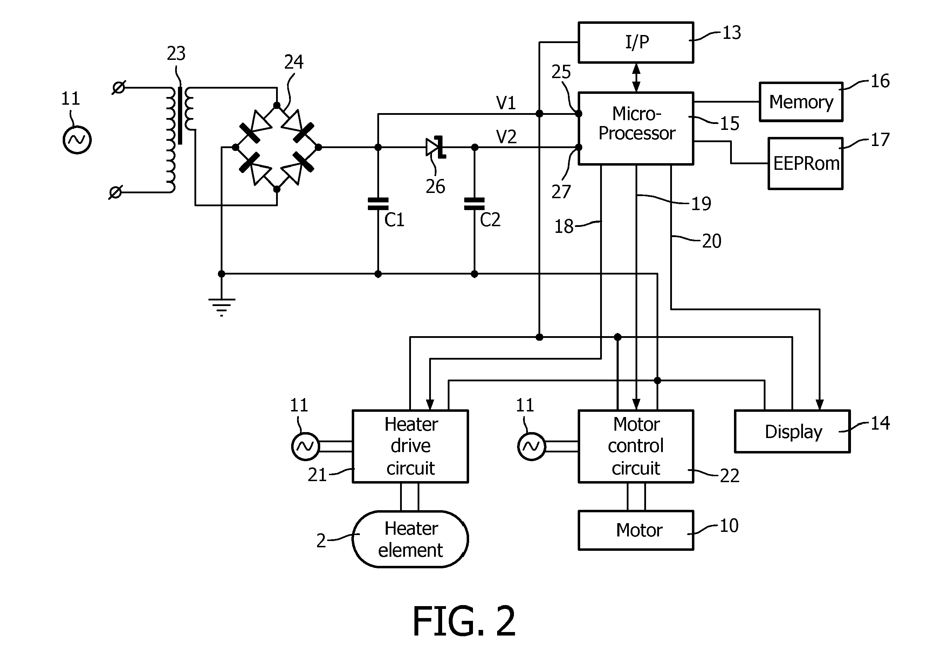

An electrical circuit diagram for the major components illustrated in Figure 1 will now be described with reference to Figure 2. The control device 12 includes a microprocessor 15 which runs selectable, predetermined control routines for the cooker according to programs held in an associated memory 16. The microprocessor 15 also has an associated non-volatile memory 17, conveniently in the form of an EEPROM. The microprocessor 15 provides control signals on lines 18, 19, 20 to a heater drive circuit 21, control circuit 22 for the motor 10 and to control the data displayed by the display 14. The input device 13 provides input signals to the microprocessor 15 for selecting the cooking control routine for a particular cooking recipe from the memory 16.

As previously described, the device receives AC electrical power from plug 11 which is supplied to the heater drive circuit which controls the supply of AC power to the heater element 2 according to control signals on line 18 from the microprocessor 15. Similarly, motor control circuit 22 controls the supply of AC power from plug 11 to motor 10 under the control of command signals from the microprocessor 15 on line 19.

Other components of the circuit shown in Figure 2 are powered from a low voltage DC supply derived from the mains AC input 11 for example through a step down transformer 23 and associated 4-way rectifier 24 with an associated smoothing capacitor C1, which produces a low voltage DC supply voltage V₁ in normal operation, e.g. 9 volts. The input device 13, heater drive circuit 21, motor control circuit 22 and display 14 all use the DC supply voltage V₁ as a power supply. The voltage V₁ is also applied to microprocessor 15 at input 25 and the processor 15 is operable to run a program to detect the voltage level at input 25.

The rectified DC output from rectifier bridge 24 is also connected through a diode 26 to an energy storage device in the form of capacitor C2. In use, the capacitor becomes charged to a voltage V₂ for example 3.3V, to act as a voltage regulator and supply a constant voltage for driving the microprocessor 15 through input terminal 27. In order for the microprocessor 15 to operate, it needs to be driven with a voltage at input terminal 27 which is at or above a threshold voltage Vₜₕ.

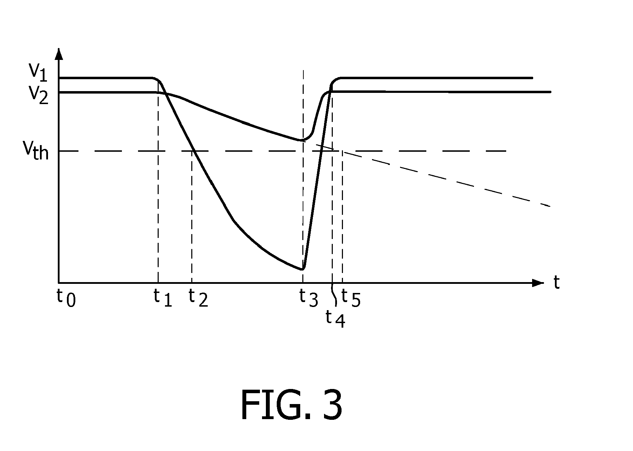

Referring to Figure 3, in normal operation, with no power supply interruption, as indicated during the period t₀-t₁, the voltage is V₁ and V₂ are both in excess of the threshold voltage Vₜₕ and so the microprocesor operates normally and runs a selected cooking program from memeory 16.

At time t₁, a power supply interruption occurs in the mains supply to plug 11, which results in a decay of the value of rectified voltages V₁ and V₂. The capacitance of capacitor C2 is significantly larger than that of smoothing capacitor C1, with a result that the voltage V₂ decays over time more slowly than voltage V₁. The microprocessor 25 can detect the occurrence of the power supply interruption by determining whether the voltage V₁ falls below the threshold voltage Vₜₕ. This occurs at time t₂. It will be seen from Figure 3 that at time t₂, the voltage V₂ remains above the threshold voltage Vₜₕ and so continues to drive the microprocessor even through the mains supply power has been interrupted. At time t₂, the microprocessor sets itself into a power saving mode with all peripherals OFF and all internal timers OFF, in order to use the energy saved in C2 sparingly in order to prolong the residual duration of the remaining charge in C2, and so the microprocessor 15 instructs the peripherals comprising the input device 13, heater driver 21, motor control circuit 22 and display 14 to shut down operation.

Thereafter, at time t₃, the power interruption ceases and as a result, the voltage V₁ is restored to its normal level at time t₄. Also, the voltage V₂ is restored to its previous level following the power supply interruption. During the interruption that occurred between times t₁ and t₃, the drive voltage V₂ was above the threshold voltage Vₜₕ and so the microprocessor 15 was driven in order to freeze the control routine according to the program from memory 16. Thus, the microprocessor 15, on restoration of the normal value of voltage V₁ instructs the peripherals that comprise the input device 13, heater drive circuit 21, motor circuit 22 and display 14 to resume operation in accordance with the selected predetermined control routine and the cooking process continues from the point at which it was frozen.

For relatively short power supply interruptions, e.g. of up to 10 seconds, the cooking performed by the slow cooker will not be degraded as a result of the power supply interruption. The thermal capacity of the cooking pot 3 and the heater element 2 are such that the cooking will continue as a result of residual heat that is stored in the pot and the heater element. However, if the power supply interruption is for a much longer period, it would not be appropriate to continue as if the interruption did not occur. For example, if the power supply interruption was for 30 minutes, the food in pot 3 would become cold and the cooking process would need to be re-started.

The described circuitry is configured to reset the cooking process in response to such a relatively long power supply interruption. Referring again to Figure 3 if a power supply interruption occurs at time t₁, the drive voltage V₂ from the capacitor C2 falls below the threshold voltage for operation Vₜₕ at time t₅. At this point, the microprocessor 15 shuts down due to lack of power and the already shut down peripherals 13, 14, 21, 22 are initialised so that when the power resumes, the entire predetermined control routine selected from memory 16 is re-run by the microprocessor 15 from the beginning in order to recommence the entire cooking process.

Thus, the described system effectively filters out short power supply interruptions without incurring a full reset of the predetermined cooking control routine but performs a full reset in the event that a relatively long power supply interruption occurs. The relationship between what constitutes a relatively short power supply interruption which can be ignored in the cooking process and a relatively long interruption period which cannot be ignored may depend on a number of factors including the style of cooking, the cooking temperature and length of the routine being performed. By way of example and without limitation, in many situations, it is advantageous if the storage device is configured to store only sufficient energy for the controller to continue to run the routine for a temporary mains power interruption that is at least ten times less than the period of the cooking routine.

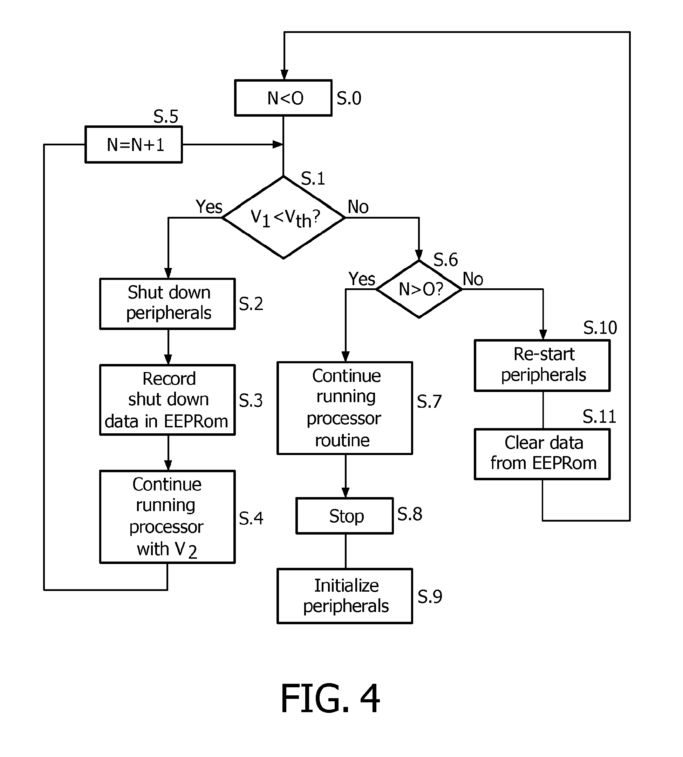

The filtering process run by the microprocessor 15 for this purpose can be stored as a program in memory 16 and a flow chart of its operation is illustrated in Figure 4 schematically. A control counter N is initially set to zero at step S.0. At step S1, the routine checks whether the voltage V₁ is less than the threshold Vₜₕ. If so, this indicates that the power supply interruption has commenced and as previously explained, the peripherals comprising display 14, heater driver 21 and motor control circuit 22, are shut down. Also, a record of the shut down may optionally be recorded as non-volatile data in EEPROM 17 as illustrated at step S3 for records purposes. However, the processor 15 powered by voltage V₂, freezes the predetermined control routine according to the program from memory 16, as indicated at step S4 until either the power interruption ends or until the voltage V₂ decays below the threshold voltage Vₜₕ in the event that the power supply interruption is of a duration longer than 10 seconds.

Thus, in the event that the power supply interruption is relatively short e.g. less than 10 seconds, the routine will freeze rather than shutting down, and moves to step S5 at which the parameter N is incremented. Thus, when the parameter N is greater than zero, this indicates that the power supply interruption has finished.

The value of parameter of N is tested at step S6 to determine if a power supply interruption has commenced. If N is not greater than zero, no power supply interruption has commenced and so the microprocessor 15 continues to run the cooking program routine without interruption, powered by drive voltage V₂ as indicated at step S7. The processor therefore runs its entire predetermined control routine over the entire period as defined by the program stored in memory 16 and then comes to a stop indicated at step S8. Thereafter, the microprocessor initialises the peripherals 13, 14, 21 and 22 ready for the next cooking operation.

However, if V₁>Vₜₕ (step S1) and the value of parameter N is greater than zero as determined at step S6, this indicates that a power supply interruption has finished (t₄) in which case the peripherals 14, 21 and 22 are restarted according to the control program that has continued to run at step S4, as if no interruption occured. However, if the voltage V₁ has been restored after the time at which the voltage V₂ can no longer drive the microprocessor 15, referenced t₅ in Figure 3, the processor 15 will have ceased operation at step S4 because the drive voltage V₂ will have dropped below level Vₜₕ necessary for operation of the microprocessor and so the step S4 will not be performed, thereby shutting down the microprocessor and causing a restart of the control routine in response to the power supply interruption that extends to time t₅ or beyond.

It will be appreciated that herein, the term "comprising" does not exclude other elements or steps and that the indefinite article "a" or "an" does not exclude a plurality. A single processor may fulfill the functions of several items recited in the claims. The mere fact that certain measures are recited in mutually different dependent claims does not indicate that a combination of these measures cannot be used to an advantage. Any reference signs in the claims should not be construed as limiting the scope of the claims.

Although claims have been formulated in this application to particular combinations of features, it should be understood that the scope of the disclosure of the present invention also includes any novel features or any novel combinations of features disclosed herein either explicitly or implicitly or any generalisation thereof, whether or not it relates to the same invention as presently claimed in any claim and whether or not it mitigates any or all of the same technical problems as does the parent invention. The applicants hereby give notice that new claims may be formulated to such features and/or combinations of features during the prosecution of the present application or of any further application derived therefrom.

Other modifications and variations falling within the scope of the claims hereinafter will be evident to those skilled in the art.

## Claims

1. A control device for use with an appliance, comprising a controller (15) configured to run a predetermined control routine that extends over a given period so as provide a sequence of control signals for controlling at least one component of the appliance, an input (11) to be connected to a mains electrical supply, and an energy storage device (C2) coupled to the input for storing energy from the mains supply and configured to power the controller using the energy stored in the storage device to permit continuation of running of the predetermined routine in response to a temporary mains power interruption during the routine, the storage device only storing sufficient energy for the controller to permit continuation of running of the routine in response to a temporary mains power interruption of a given duration less than the period of the routine.

2. A control device according to claim 1 wherein the energy stored by the storage device can only power the controller to permit continuation of the routine for temporary power supply interruptions of the order of seconds.

3. A control device according to claim 1 or 2 wherein the energy stored by the storage device can only power the controller to continue to run the routine during temporary power supply interruptions of up to 10 seconds.

4. A control device according to any preceding claim wherein the given period for the control routine run by the controller is of the order of minutes.

5. A control device according to any preceding claim wherein the period of the control routine is up to 99 minutes.

6. A control device according to any preceding claim wherein the storage device is configured to store only sufficient energy for the controller to permit continuation of the routine for a temporary mains power interruption that is at least ten times less than the period of the routine.

7. A control device according to any preceding claim wherein the energy storage device comprises a capacitor.

8. A control device according to claim 7 wherein the device is configured to run on mains AC. supply and including a rectifying element to charge the capacitor from the AC supply.

9. A control device according to any preceding claim wherein the controller is configured to stop the predetermined control routine in response to no longer being powered by the stored energy following a temporary power interruption that is longer than said given duration, and not to recommence the routine once mains power is restored following said interruption longer than the given duration.

10. A control device according to any preceding claim incorporated in an electrical cooker.

11. A method of controlling an appliance, comprising operating a controller with power derived from a mains supply to run a predetermined control routine that extends over a given period so as provide a sequence of control signals for controlling at least one component of the appliance, using an energy storage device to store energy from the mains supply, and powering the controller using the energy stored in the storage device to permit continuation of the predetermined routine when a temporary mains power interruption occurs during the routine for a given duration less than the period of the routine.

12. A computer program to be run by a processor to control operation of a control device for use with an appliance, comprising a controller configured to run a predetermined control routine that extends over a given period so as provide a sequence of control signals for controlling at least one component of the appliance, an input to be connected to a mains electrical supply, and an energy storage device coupled to the input for storing energy from the mains supply and configured to power the controller using the energy stored in the storage device to permit continuation of the predetermined routine when a temporary mains power interruption occurs during the routine, the storage device only storing sufficient energy for the controller to permit continuation of the routine for a temporary mains power interruption of a given duration less than the period of the routine, the program being operable to determine when the interruption commences and to thereafter run the controller with power derived from the energy storage device.

13. A computer program according to claim 12 operable to instruct peripheral devices controlled by the controller to shut down in the event of said interruption and to recommence operation in the event that the interruption ceases prior to expiry of said duration.
